Europäisches Patentamt

European Patent Office

Office européen des brevets

(11) Numéro de publication: **0 406 497 A1**

## (12) DEMANDE DE BREVET EUROPEEN

(21) Numéro de dépôt: 89401911.6

(22) Date de dépôt: 04.07.89

(51) Int. Cl.5: **B63B 1/24, B63B 1/32**

(43) Date de publication de la demande:
09.01.91 Bulletin 91/02

(84) Etats contractants désignés:
AT BE DE NL

(71) Demandeur: Ebersolt, Michel
22 Avenue Peschier
CH-1206 Genève(CH)

(72) Inventeur: Ebersolt, Michel
22 Avenue Peschier
CH-1206 Genève(CH)

(74) Mandataire: Hoisnard, Jean-Claude et al
Cabinet Beau de Lomenie 55, rue
d'Amsterdam
F-75008 Paris(FR)

(54) Navire comportant un aileron immergé, notamment barge rapide.

(57) L'invention est relative à un navire ayant une coque comprenant une partie avant constituant une étrave (7).

Un aileron (4) est fixé (5) sur ladite étrave, en étant disposé sensiblement parallèlement à cette étrave, de manière à être susceptible d'être placé à une distance non nulle de l'étrave et de former, en coopération avec l'étrave, un canal de guidage des filets d'eau le long de l'étrave.

Une application est la réalisation d'une barge rapide.

FIG.2

EP 0 406 497 A1

On sait qu'un flotteur très lent peut avoir une forme voisine d'un parallélépipède rectangle. Il en est ainsi des péniches et des barges. Si l'on désire que ces engins se propulsent plus rapidement, il faut affiner les formes de l'avant et de l'arrière. Toutefois, l'obligation de maintenir un tirant d'eau faible, tout en maintenant une capacité de charge suffisante, ne permet pas d'obtenir des formes aussi effilées que pour un navire traditionnel.

Si l'on veut dépasser les vitesses habituelles, on constate que, sur l'avant de la barge, il se forme une accumulation d'eau qui accroît la résistance.

D'après l'invention, on rapporte, en dessous de l'avant de la péniche, une aile portante qui a pour fonction de canaliser l'eau vers le fond de la péniche. Ainsi, on n'observe plus l'accumulation d'eau sur l'étrave qui génère une résistance démesurée. Cette aile peut être déplacée en hauteur pour s'adapter aux variations de tirant d'eau de la barge ou être complètement rétractée contre le bordé.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels :
- la figure 1 représente une vue en plan de la barge munie de son dispositif, suivant flèche S de la figure 2 ;
- la figure 2 représente une coupe de la péniche suivant un plan vertical longitudinal ;
- la figure 3 représente une vue de l'avant vers l'arrière de ladite péniche, suivant flèche R de la figure 1 ;
- la figure 4 représente une vue transversale suivant IV-IV de la figure 2 du système de contrôle en hauteur de l'aile ;
- la figure 5 représente une vue suivant V-V de la figure 4 du même dispositif.

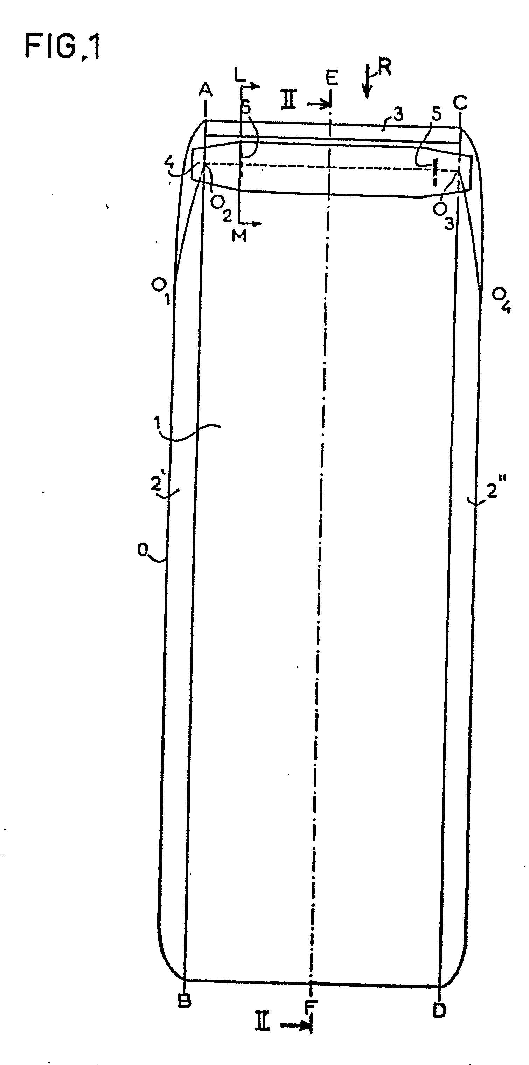

Sur la figure 1, la coque (O) de la barge apparaît vue en plan par-dessous. La coque est constituée de deux parties. La première partie (1) est située entre les plans verticaux AB et CD et est constituée par des droites perpendiculaires aux plans AB et CD, de telle sorte que les sections de la partie (1) par des plans verticaux parallèles à AB ou CD sont toutes identiques. Cette partie est ainsi une surface développable. La seconde partie est constituée de deux fuseaux $(2')$ et $(2'')$ effilés et symétriques par rapport à l'axe EF. Ces deux fuseaux se raccordent sur la partie (1) de manière à constituer une surface fermée constituant la coque de la barge. Les deux arêtes de raccordement se projettent suivant les lignes AB et CD.

Sur l'avant de la barge, au-dessous de la ligne de flottaison et légèrement en arrière de l'étrave (3), se trouve un profil ou aileron (4) en forme d'aile portante, placé transversalement à l'axe EF, et admettant le même axe de symétrie. Ce profil porteur ou aileron (4) est raccordé à la coque par deux plaques planes verticales (5) parallèles au plan de symétrie EF. La ligne de flottaison de la partie avant apparaît suivant le contour $O_1$, $O_2$, $O_3$, $O_4$.

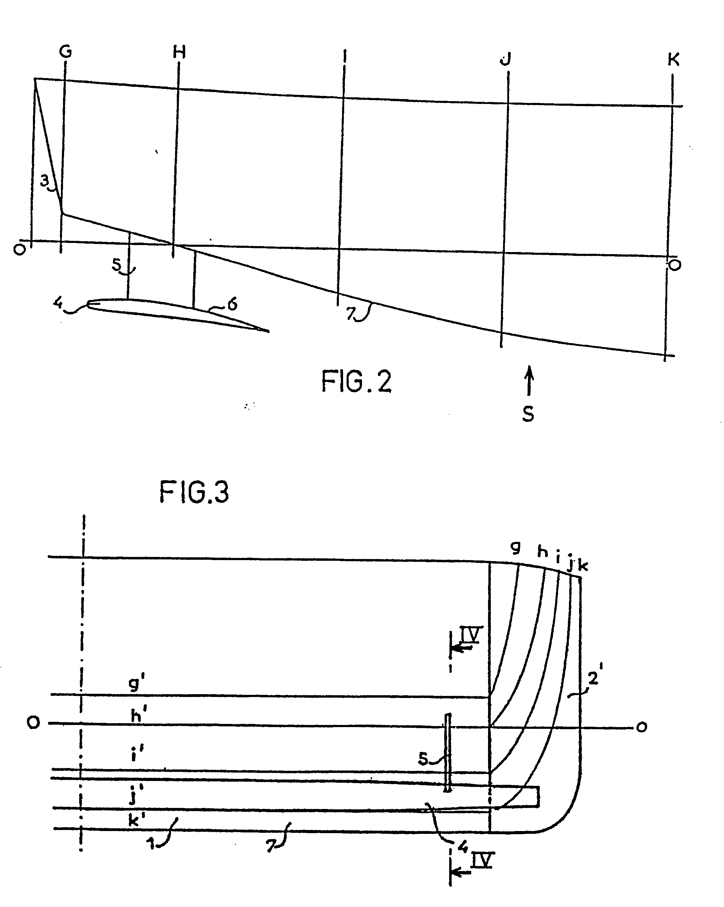

La figure 2 est une coupe de la barge par un plan vertical parallèle à EF et compris entre les plans AB et CD.

L'aile (4) est immergée en dessous de la ligne de flottaison OO. L'extrados (6) du profil est constitué de lignes droites perpendiculaires au plan de la figure. Ainsi, l'espace limité par l'extrados (6) et le fond (7) de la barge se présente comme un conduit dont la section transversale offerte à l'écoulement est rectangulaire.

Au voisinage des extrémités latérales de l'aile (4), la corde du profil peut être diminuée comme il apparaît sur la figure 1. Les plaques (5) relient l'aile à la coque.

La figure 3 met en évidence la forme effilée des volumes $(2')$ et $(2'')$. Les courbes g, h, i, j, k représentent des sections de $(2')$ par les plans verticaux transversaux G, H, I, J, K de la figure 2. Les sections de la partie (1) par ces mêmes plans sont des droites horizontales $g'$, $h'$, $i'$, $j'$, $k'$, situées en dessous de l'étrave (3). Le profil porteur (4) apparaît en avant du fond (7).

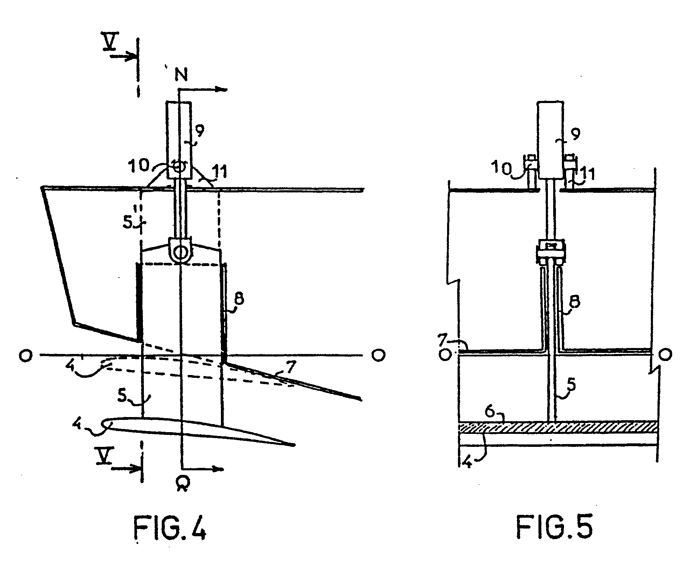

La figure 4 est obtenue suivant la coupe LM de la figure 1. La plaque plane (5) qui supporte l'aile portante (4) est mobile à l'intérieur d'un puits (8) qui lui sert de glissière. Le vérin (9) permet de contrôler en hauteur la position de l'aile (4). Le vérin est articulé autour d'un axe (10) relié à la coque par les goussets (11). Un dispositif analogue est implanté sur l'autre bord de la barge. L'aile (4), en position haute, est figurée en traits pointillés $(4')$ ainsi que la plaque (5) dans cette même position $(5')$. La ligne OO représente la flottaison.

La figure 5 est obtenue par la coupe suivant la ligne NQ de la figure 4. Le fond (7) apparaît horizontal, l'extrados (6) également horizontal délimite une ouverture de section rectangulaire au passage de l'eau. Le puits (8) est soudé au fond (7) et sert de glissière à la plaque (5). Le vérin (9), relié à la coque par l'articulation (10) et les goussets (11), permet de régler en hauteur l'aile (4) et de la remonter jusqu'à toucher le fond (7). La barge suivant l'invention permet d'atteindre des vitesses supérieures à celles obtenues habituellement pour une puissance donnée.

## Revendications

1. Navire ayant une coque comprenant une partie avant constituant une étrave (7),

caractérisé en ce qu'un aileron (4) est fixé (5) sur ladite étrave, en étant disposé sensiblement parallèlement à cette étrave, de manière à être susceptible d'être placé à une distance non nulle de l'étrave et de former, en coopération avec l'étrave, un canal de guidage des filets d'eau le long de l'étrave.

2. Navire selon la revendication 1, caractérisé en ce que, de manière connue en soi, sa coque possède une partie développable (7), telle celle d'une barge ou d'une péniche, qui s'étend sur la majeure partie de sa largeur et qui est générée par des droites horizontales perpendiculaires au plan longitudinal vertical de symétrie (EF) du navire, cependant que ledit canal, formé en coopération par l'étrave (7) et l'aileron (4), a une section transversale sensiblement rectangulaire.

3. Navire selon la revendication 2, caractérisé en ce que l'aileron (4) est fixé sur l'étrave (7) en une position réglable au moyen de bras de fixation parallèles (5), eux-mêmes réglables en position par rapport à la coque, de manière, dans une position extrême de cet aileron, que celui-ci soit disposé sensiblement au contact de la coque, sensiblement plaqué sur celle-ci.

4. Navire selon la revendication 3, caractérisé en ce que chaque bras de fixation (5) est disposé, réglable en position, dans un puits vertical (8) parallèle au plan longitudinal de symétrie (EF) du navire, un vérin de réglage de position (9) au moins étant attelé (10, 11) entre la coque (7) et ledit bras de fixation (5).

5. Navire selon l'une quelconque des revendications 2 à 4, caractérisé en ce que la coque comprend, en outre, deux parties effilées (2′ et 2″) en forme de fuseaux, disposées de part et d'autre de la partie développable (7) et symétriques par rapport au plan longitudinal vertical de symétrie (EF).

# FIG.1

FIG.2

FIG.3

FIG.4

FIG.5

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 756 073  (WIESER) <br> * Page 17, lignes 28-32; figures 7a,8a,9a * <br> ----- | 1,2 | B 63 B    1/24 <br> B 63 B    1/32 |

DOMAINES TECHNIQUES
RECHERCHES (Int. Cl.5)

B 63 B

Le présent rapport a été établi pour toutes les revendications

| Lieu de la recherche | Date d'achèvement de la recherche | Examinateur |
|---|---|---|
| LA HAYE | 09-02-1990 | VISENTIN, M. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P0402)